# EUROPÄISCHE PATENTSCHRIFT

(11) **EP 1 467 935 B1**
(45) Veröffentlichungstag und Bekanntmachung des Hinweises auf die Patenterteilung: **10.08.2005**
(21) Anmeldenummer: 03702466.8
(22) Anmeldetag: 18.01.2003
(51) Int. Cl.: B65G 49/04

(54) **VORRICHTUNG UND VERFAHREN ZUR OBERFL CHENBEHANDLUNG VON TEIL EN**
DEVICE AND METHOD FOR THE SURFACE TREATMENT OF PARTS
DISPOSITIF ET PROCEDE POUR TRAITER LA SURFACE DE PIECES

(30) Priorität: 21.01.2002 DE 10202625; 21.08.2002 DE 10239484
(43) Veröffentlichungstag der Anmeldung: 20.10.2004
(73) Patentinhaber: Epv-Tec Gmbh, 75179 Pforzheim (DE)
(72) Erfinder: SAUPE, Detlev, 75203 Königsbach-Stein (DE); WURSTER, Gerd, 70191 Stuttgart (DE)
(74) Vertreter: Gahlert, Stefan, Dr.-Ing.
(86) Internationale Anmeldenummer: PCT/EP2003/000473
(87) Internationale Veröffentlichungsnummer: WO 2003/059793

(56) Entgegenhaltungen:
- DE-A- 2 146 851
- DE-C- 19 959 942
- DE-U- 20 022 321
- US-A- 4 411 357

## Beschreibung

Die Erfindung betrifft eine Vorrichtung zur Oberflächenbehandlung von Teilen, mit Behandlungsstationen, insbesondere Behandlungsbädern, zur Behandlung der Teile, mit einer Fördereinrichtung zum Transport der Teile, entlang derer mindestens ein Tragelement beweglich geführt ist, an dem eine Aufnahme zur Befestigung mindestens eines zu behandelnden Teils vorgesehen ist, die an einer Schwenkeinrichtung mit einer im wesentlichen horizontalen Schwenkachse verschwenkbar gehalten ist, wobei die Teile durch Bewegung des Tragelements entlang der Fördereinrichtung in eine Arbeitsposition oberhalb oder unterhalb einer Behandlungsstation bewegbar sind, wobei das Tragelement derart ausgebildet ist, dass die Teile in der Arbeitsposition oberhalb oder unterhalb einer Behandlungsstation in die Behandlungsstation ein- und ausschwenkbar sind.

Die Erfindung betrifft ferner ein Verfahren zur Oberflächenbehandlung von Teilen in Behandlungsstationen, bei dem die Teile jeweils an einer Aufnahme befestigt werden, die an einem Tragelement verschwenkbar aufgenommen ist, das entlang einer Fördereinrichtung verfahrbar ist, wobei die Teile durch Bewegen der Tragelemente entlang der Fördereinrichtung zu den Behandlungsstationen transportiert werden, über diesen oder unter diesen positioniert werden und durch Verschwenken um eine im wesentlichen horizontale Schwenkachse in die Behandlungsstationen ein- und wieder ausgeschwenkt werden.

Unter dem Begriff "Oberflächenbehandlung von Teilen" wird im Rahmen dieser Anmeldung jegliche chemische und/oder physikalische Behandlung von Teilen verstanden, wozu die für eine spätere Beschichtung der Teile übliche chemische Vorbehandlung, wie z.B. Entfetten, Spülen, Aktivieren, Zinkphosphatieren usw. gehört. Alternativ dazu oder darüber hinaus ist unter dem Begriff "Oberflächenbehandlung von Teilen" auch der Beschichtungsvorgang für eine Oberflächenbeschichtung der Teile selbst zu verstehen, wozu beispielsweise ein Tauchlackieren gehören kann.

Ein Vorrichtung und ein Verfahren der vorstehend genannten Art sind aus der DE-U-200 22 634 bekannt. Hierbei ist im Bereich der Behandlungsstationen eine Führungseinrichtung vorgesehen, entlang derer Drehgestelle verfahrbar sind, auf denen jeweils eine drehbare Aufnahme für eine Fahrzeugkarosserie vorgesehen ist, die derart angeordnet ist, dass die Fahrzeugkarosserie durch Drehung um eine Drehachse in eine der Behandlungsstationen ein- und ausbringbar ist. Hierbei sind die Drehgestelle jeweils mit einem eigenen Antrieb versehen und unabhängig voneinander verfahrbar.

Mit einer derartigen Ausführung lässt sich zwar ein relativ einfacher Transport der Teile zwischen den Behandlungsstationen erreichen und das Einbringen und Ausbringen in eine Behandlungsstation erleichtern, jedoch werden auch mit einer derartigen Vorrichtung und einem derartigen Verfahren die in jüngster Zeit gestiegenen Qualitätsanforderungen an die Qualität der fertig behandelten Oberfläche vielfach nicht erreicht.

Die Aufgabe der Erfindung besteht darin, eine Vorrichtung und ein Verfahren für eine möglichst hochwertige Oberflächenbehandlung von Teilen anzugeben, womit möglichst wenig Fehlstellen auf der fertigen Oberfläche, z.B. der lackierten Oberfläche, erreicht werden können. Dabei ist ein möglichst zuverlässiger und kostensparender Aufbau angestrebt.

Diese Aufgabe wird bei einer Vorrichtung gemäß der eingangs genannten Art dadurch gelöst, dass die Aufnahme an Schwenklagern verschwenkbar aufgenommen ist, die sich in einer Arbeitsposition zum Ein- oder Ausschwenken eines Teils in eine Behandlungsstation seitlich außerhalb der Behandlungsstation befinden.

Hinsichtlich des Verfahrens wird die Aufgabe bei einem Verfahren gemäß der eingangs genannten Art dadurch gelöst, dass die Teile während des Ein- und Ausschwenkens in die Behandlungsstationen jeweils seitlich außerhalb einer der Behandlungsstationen gehalten und vorzugsweise angetrieben werden.

Die Aufgabe der Erfindung wird auf diese Weise vollkommen gelöst.

Da erfindungsgemäß die Aufnahme zur Halterung der Teile in einer Arbeitsposition zum Ein- oder Ausschwenken eines Teils in eine Behandlungsstation seitlich außerhalb der Behandlungsstation vorgesehen ist, wird so eine Kontamination etwa von Behandlungsbädern durch Austreten von Schmiermittel und dergleichen aus den Schwenklagern vermieden. Die Möglichkeit zur Eintragung von Fremdpartikeln in die Behandlungsstationen wird so auf ein Minimum reduziert.

Unter einer Anordnung der Schwenklager "seitlich außerhalb der Behandlungsstation" ist im Rahmen dieser Anmeldung zu verstehen, dass die Schwenklager so weit gegenüber der Behandlungsstation versetzt sind, dass eine Kontamination der Behandlungsstation durch austretende Verunreinigungen aus den Schwenklagern vermieden wird. Ist die Behandlungsstation beispielsweise als Behandlungsbad ausgebildet ist, so bedeutet dies, dass sich die Schwenklager nicht vertikal oberhalb der vom Behandlungsbad aufgespannten Fläche befinden dürfen, sondern seitlich nach außen versetzt angeordnet sind. Ist die Behandlungsstation selbst von einem Gehäuse nach außen abgeschirmt, so können sich die Schwenklager zwar innerhalb des Gehäuses befinden, jedoch seitlich versetzt gegenüber der vom Behandlungsbad aufgespannten Fläche.

Erfindungsgemäß wird ferner durch Anordnung und Ausgestaltung von Fördereinrichtung und Tragelementen sichergestellt, dass sich die zu behandelnden Teile durch eine Schwenkbewegung in die Behandlungsstationen einschwenken und aus diesen wieder ausschwenken lassen. So wird ein besonders einfacher und kostengünstiger Verfahrensablauf gewährleistet.

Hierbei verläuft die Fördereinrichtung vorzugsweise seitlich neben den Behandlungsstationen oder ggf. oberhalb bzw. unterhalb der Behandlungsstationen. Sofern die Fördereinrichtung seitlich neben den Behandlungsstationen angeordnet ist, so wird durch einen Ausleger, der jeweils in Richtung auf eine Behandlungsstation horizontal vorsteht, eine Positionierung oberhalb bzw. unterhalb einer Behandlungsstation in einer Arbeitsposition ermöglicht, in der lediglich eine Verschwenkung notwendig ist, um das Teil in die Behandlungsstation ein- bzw. ausschwenken zu können. Sofern die Fördereinrichtung zumindest teilweise oberhalb der Behandlungsstationen angeordnet ist, so sind die Tragelemente an der Fördereinrichtung aufgehängt und können vorzugsweise jeweils durch einen selbständigen Antrieb entlang der Fördereinrichtung verfahren werden.

Die Fördereinrichtung verläuft in bevorzugter Weiterbildung der Erfindung außerhalb der Behandlungsstation.

Durch eine solche Anordnung, wonach die Fördereinrichtung gegenüber der Behandlungsstation seitlich versetzt angeordnet ist, wird eine Kontamination der Behandlungsstation durch aus der Fördereinrichtung austretende Verunreinigungen vermieden.

Hierbei kann die Fördereinrichtung ferner durch eine Wand gegenüber der Behandlungsstation abgetrennt sein.

In vorteilhafter Weiterbildung der Erfindung weist die Schwenkeinrichtung einen Schwenkantrieb auf, der sich in der Arbeitsposition seitlich außerhalb der entsprechenden Behandlungsstation befindet.

So wird auch eine Kontamination der Behandlungsstation durch den Schwenkantrieb vermieden.

In weiterer vorteilhafter Ausgestaltung der Erfindung besitzt das Tragelement einen davon in Horizontalrichtung hervorstehenden Ausleger, an dem die über oder unter einer Behandlungsstation positionierbare Aufnahme vorgesehen ist.

Auf diese Weise kann die Fördereinrichtung für die jeweiligen Tragelemente vollständig außerhalb der Behandlungsstationen vorgesehen sein. Die Überführung der Teile in die Arbeitsposition zum Einschwenken in eine Behandlungsstation wird durch den in Horizontalrichtung hervorstehenden Ausleger ermöglicht. Da sich die Fördereinrichtung somit vollständig seitlich außerhalb der Behandlungsstationen befindet, ist diese für Wartungs- und Reparaturarbeiten gut zugänglich.

Sofern die Behandlungsstation von der Fördereinrichtung durch eine Wand getrennt ist, so verläuft der Ausleger vorzugsweise durch einen in der Wand vorgesehenen Schlitz.

Hierdurch wird eine Kontamination von Teilen während der Oberflächenbehandlung auf ein Minimum reduziert.

Gemäß einer Weiterbildung der Erfindung ist eine Steuereinrichtung vorgesehen, die zumindest mit der Fördereinrichtung und den Schwenkeinrichtungen zur Steuerung der Bewegung von zu behandelnden Teilen gekoppelt ist.

Auf diese Weise kann eine optimale Behandlung der Teile in den Behandlungsstationen erreicht werden.

Mittels der Schwenkeinrichtung kann das Ein- und Ausschwenken unter einem beliebigen Winkel erfolgen. Dadurch sind Lufteinschlüsse beim Tauchvorgang erheblich vermindert, so dass Fehlbeschichtungen vermieden werden. Die Schwenkbewegung kann auch während der Behandlungs- bzw. Beschichtungszeit innerhalb der Behandlungsstation ausgeführt werden, so dass dadurch eine intensivere Umströmung des zu behandelnden Teils möglich ist. Dadurch können auch eventuell noch vorhandene Luftblasen durch die Relativbewegung des Teils wandern, so dass auf diese Weise alle Flächen optimal vorbehandelt bzw. beschichtet werden.

Je nach der Ausgestaltung der Schwenkeinrichtung und des Auslegers, an dem diese aufgenommen ist, kann die Schwenkbewegung bis zu 180° betragen oder auch eine vollständige Schwenkung um 360° oder mehr ermöglichen. Auf diese Weise können die Teile lediglich durch eine Schwenkbewegung ohne zusätzliche Hubeinrichtung in eine Behandlungsstation eingeschwenkt und anschließend wieder ausgeschwenkt werden. So besteht die Möglichkeit, Teile aus einer waagrechten Stellung heraus auf eine Überkopfposition in der Behandlungsstation zu verschwenken. Somit lassen sich Flächen, die in hoher qualitativer Ausführung vorbehandelt und beschichtet werden müssen, so positionieren, dass sich diese mit der Sichtseite nach unten in der Behandlungsstation befinden, wodurch eine Verschmutzung durch Absetzen von Partikeln auf diesen Flächen im Behandlungsbad ausgeschlossen ist. Ferner ist durch die Schwenkbewegung ein optimales Auslaufen der zu tauchenden Teile sichergestellt, und Badverschleppungen etwa zwischen einzelnen Behandlungsbädern werden minimiert. Komplizierte, schöpfende Teile lassen sich auf diese Weise ohne Fehlstellen beschichten. Auch kann der Ablauf des Eintauchens bzw. des Austauchens auf die Geometrie, Stabilität und das Tropfverhalten z.B. einer Fahrzeugkarosserie abgestimmt werden. So kann z.B. ein Stehen bleiben für eine gewisse Zeit in einer senkrechten Stellung zwecks verbessertem Abtropfen erfolgen.

In weiterer vorteilhafter Ausgestaltung der Erfindung weist jedes Tragelement einen Antrieb zum Verfahren entlang einer Führung der Fördereinrichtung auf.

Auf diese Weise besteht eine größtmögliche Flexibilität bei der Bewegung der einzelnen Tragelemente und damit der zu behandelnden Teile. Sogar ein begrenztes Zurückfahren wird ermöglicht. Dies ist insbesondere für kleine Anlagen vorteilhaft. Z.B. kann ein einziges Spülbad nach zwei verschiedenen Prozessen, z.B. Entfetten und Phosphatieren, genutzt werden, indem vom Phosphatierungsbad aus zum Spülbad zurückgefahren wird. Dies ermöglicht einen besonders kompakten Aufbau bei kleineren Durchsätzen.

Hierbei weist vorzugsweise die Schwenkeinrichtung einen Schwenkantrieb auf, der über die Fördereinrichtung mit Energie versorgt wird.

Vorzugsweise geschieht dies dadurch, dass der Schwenkantrieb über einen an einer Führung der Fördereinrichtung verfahrbaren Schlitten mit Energie versorgt wird.

Auf diese Weise werden Schleppkabel vermieden, die sonst zur Energieversorgung der Schwenkantriebe notwendig wären.

In weiterer vorteilhafter Ausgestaltung der Erfindung ist die Fördereinrichtung als Elektrohängebahn ausgebildet.

Elektrohängebahnen weisen bekanntlich ein Trag- und Führungselement zum Beispiel in Form eines I-Profils auf. An diesem Trag- und Führungselement sind ferner integrierte Stromschienen vorgesehen, um daran an einem Schlitten geführte Fahrzeuge mit Energie versorgen zu können. Ferner werden hierüber Steuersignale ausgetauscht, so dass die Fahrzeuge selbständig angetrieben und gesteuert verfahren können. Bevorzugt sind hierbei die einzelnen Fahrzeuge mit einer eigenen, kleinen SPS-Steuerung ausgestattet.

Mit einer derartigen Fördereinrichtung lässt sich ein besonders flexibler Fertigungsablauf bei der Oberflächenbehandlung der Teile gewährleisten. Insbesondere in Verbindung mit einem zentralen Leitrechner, der mit Einzelsteuerungen der Fahrzeuge gekoppelt ist, lässt sich ein hochflexibler Ablauf gewährleisten.

In vorteilhafter Ausgestaltung der Erfindung weist die Aufnahme einen an Drehzapfen gelagerten, vorzugsweise U-förmigen, H-förmigen oder rechteckförmigen Schwenkrahmen auf, an dem Befestigungselemente zur Befestigung eines zu behandelnden Teils aufgenommen sind.

Auf diese Weise ergibt sich ein besonders einfacher und für einen Schwenkvorgang zum Ein- und Ausschwenken geeigneter Aufbau der Aufnahme. Insbesondere mit einem U-förmigen Rahmen ergibt sich ein besonders günstiges Abtropfverhalten. Vorzugsweise befindet sich der Schwenkrahmen selbst außerhalb des Tropfbereiches des zu behandelnden Teils, wozu am Schwenkrahmen nach innen hin vorstehende Laschen oder Zungen vorgesehen sein können, an denen Streben zur Aufnahme des Teils vorgesehen sind. So wird die Kontamination minimiert.

Gemäß einer weiteren Ausführung der Erfindung ist eine Mehrzahl von Tragelementen mittels eines Umlaufförderers angetrieben.

Auf diese Weise ergibt sich eine besonders kostengünstige Möglichkeit zum Antrieb der Fördereinrichtung. Hierbei können die Tragelemente entweder von einem Schleppantrieb gemeinsam oder vorzugsweise auch selbsttätig angetrieben sein.

In zusätzlicher Weiterbildung der Erfindung ist an dem mindestens einen Tragelement eine Hubeinrichtung vorgesehen, mittels derer der Ausleger in Vertikalrichtung verfahrbar am Tragelement aufgenommen ist.

Auf diese Weise kann zusätzlich zu der Schwenkbewegung eine Hubbewegung durchgeführt werden, wodurch eine optimierte Behandlung ermöglicht wird. So können die Schwenkbewegung und die Hubbewegung je nach der Struktur der zu behandelnden Teile derart aufeinander abgestimmt werden, dass sich ein besonders günstiges Eintauchverhalten, eine Minimierung von Luftblasen während der Behandlung, eine besonders gleichmäßige Behandlung und ein optimiertes Auslaufen beim Austauchen aus einem Behandlungsbad ergibt.

In zusätzlicher Weiterbildung der Erfindung ist die Fördereinrichtung als Umlaufförderer ausgebildet, der sich mit einem Arbeitsabschnitt entlang der Stirnseiten der Behandlungsstationen in der ersten Richtung (x-Richtung) erstreckt und mit einem Rückführabschnitt von den Behandlungsstationen beabstandet zurückgeführt ist, wobei zwischen dem Arbeitsabschnitt und dem Rückführabschnitt Kopfabschnitte gebildet sind, mit einer Übernahmeposition zur Aufnahme von zu behandelnden Teilen an einem der Kopfabschnitte und einer Übergabeposition zur Ausgabe von behandelten Teilen am anderen Kopfabschnitt. Die einzelnen Kopfabschnitte können auch sowohl zur Aufnahme als auch zur Ausgabe genutzt werden.

Auf diese Weise wird eine besonders kompakte und kostengünstige Gesamtanordnung erreicht. Mittels des Umlaufförderers können nämlich sämtliche Behandlungsstationen umfahren werden. Durch die Kurvenfahrten im Übergangsbereich zwischen dem Arbeitsabschnitt bzw. dem Rückführabschnitt und den Kopfabschnitten kann das Fördergut, das in der Regel in Längsrichtung zur Anlage ankommt, unmittelbar in dieser Position an der Übernahmeposition auf die Aufnahme einer Schwenkeinrichtung übernommen werden und gelangt durch die anschließende Kurvenfahrt in die korrekte Position, in der durch Verschwenkung bzw. Hub das Eintauchen etwa in ein Behandlungsbad erfolgt. In entsprechender Weise ist es möglich, die behandelten Teile am gegenüberliegenden Kopfabschnitt des Umlaufförderers an der Übergabeposition entweder in der ersten Richtung (x-Richtung) oder in einer Richtung senkrecht dazu auszugeben, um diese einem nachgeordneten Prozess, beispielsweise einer Einbrennanlage, zuzuführen. Auf diese Weise werden zusätzliche, fördertechnische Einrichtungen, wie Drehscheiben und dergleichen, vermieden. Grundsätzlich ist natürlich auch eine Übergabe an den Längsabschnitten möglich.

Gemäß einer weiteren Ausgestaltung der Erfindung ist mindestens eine der Behandlungsstationen als Spritztunnel oder Spültunnel ausgebildet. Hierbei weist die Behandlungsstation vorzugsweise Abdeckplatten auf, die oberhalb der Behandlungsstation zusammenfahrbar sind.

Auf diese Weise lässt sich sogar eine Spritzbehandlung ermöglichen.

In den Abdeckplatten sind vorzugsweise Längsschlitze zum Vor- und Zurückfahren der Tragelemente, sowie Querschlitze vorgesehen, die ein geringes Verschwenken der Tragelemente um eine sich in Richtung der Fördereinrichtung erstreckende Schwenkachse erlauben.

Auf diese Weise kann während der Spritzvorbehandlung eine Bewegung durchgeführt werden, um ein gleichmäßiges Spritzbild zu erreichen.

In weiterer Ausgestaltung der Erfindung ist zumindest eine der Behandlungsstationen als Trockenstation, Einbrennofen, Inspektionsraum, Kühlstation, Klebestation oder Unterbodenschutzspritzstation ausgebildet.

Auf diese Weise kann die Fördereinrichtung genutzt werden, um einen vollständigen Transport der Teile nicht nur durch Vorbehandlungsstationen, sondern auch durch weitere Stationen etwa einer Tauchlackieränlage zu gewährleisten. Dadurch werden Umsetzungsvorgänge vermieden, was die Qualität der erzeugten Oberflächen verbessert.

Bei Stationen, die von einem Gehäuse umschlossen sind, ist hierbei vorzugsweise im Boden oder in der Decke eine Einführöffnung zum Einschwenken eines Tragelementes in das Gehäuse vorgesehen, die über einen sich in Richtung der Fördereinrichtung erstreckenden Schlitz mit einer Ausführöffnung zum Ausschwenken eines Tragelementes aus dem Gehäuse verbunden ist.

So kann ein auf einem Tragelement aufgenommenes Teil am Beginn des Gehäuses in das Gehäuse eingeschwenkt werden, in Vertikallage darin transportiert werden und am Ende der Behandlung wieder ausgeschwenkt werden. Da während der Behandlung z.B. innerhalb eines Trockners z.B. ein stehender Transport erfolgen kann, ergibt so eine besonders hochwertige Oberfläche.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein Gesamtschema einer erfindungsgemäßen Vorrichtung in der Aufsicht in stark vereinfachter Darstellung;
- Fig. 2: einen Querschnitt durch die erfindungsgemäße Vorrichtung in einer zur ersten Richtung (Haupttransportrichtung) senkrechten Ebene, in stark vereinfachter Darstellung;
- Fig. 3: eine Abwandlung der Ausführung gemäß Fig. 2;
- Fig. 4: eine weitere Abwandlung der Erfindung in vereinfachter Ansicht auf eine Aufnahme für ein zu behandelndes Teil von vorn;
- Fig. 5: eine Seitenansicht von Tragelement mit Aufnahme einer leicht gegenüber Fig. 4 veränderten Ausführung;
- Fig. 6: eine weitere Abwandlung der Erfindung, bei der ein Tragelement mit Ausleger in vereinfachter Aufsicht dargestellt ist;
- Fig. 7: einen vergrößerten Ausschnitt aus der erfindungsgemäßen Vorrichtung gemäß Fig. 4;
- Fig. 8: eine weitere Abwandlung der Ausführung gemäß Fig. 4, bei der die Behandlungsstation als Spritztunnel ausgebildet ist;
- Fig. 9: eine Ansicht der Abdeckplatten des Spritztunnels gemäß Fig. 8 von oben;
- Fig. 10: eine weitere Abwandlung der Erfindung, bei die Aufnahme mit einem daran aufgenommenen Teil in aufrechter Position durch einen Bodenschlitz der Behandlungsstation transportiert werden kann und
- Fig. 11: eine Ansicht des Bodens der Vorrichtung gemäß Fig. 10 von unten, in vereinfachter Darstellung.

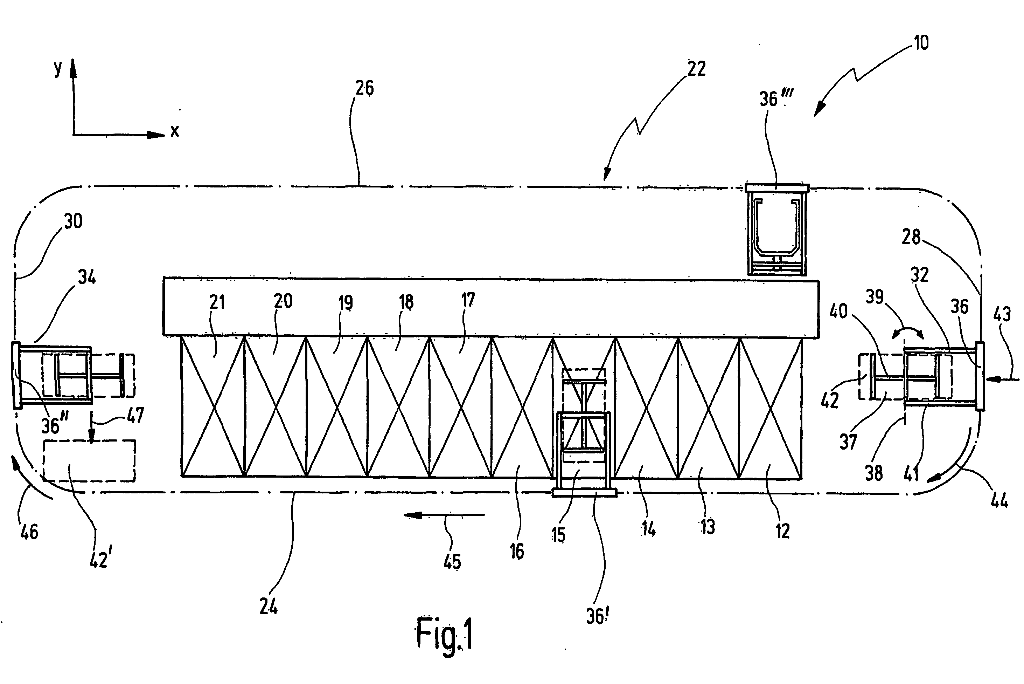

In Fig. 1 ist eine erfindungsgemäße Vorrichtung zur Oberflächenbehandlung von Teilen in der Aufsicht stark vereinfacht dargestellt und insgesamt mit der Ziffer 10 bezeichnet.

Die Vorrichtung 10 umfasst eine Mehrzahl von Behandlungsstationen in Form von Behandlungsbädern 12, 13, 14, 15, 16, 17, 18, 19, 20, 21 mit einem rechteckförmigen Grundriss, die mit ihren Längsseiten aneinander angrenzend angeordnet sind, so dass sich die Stirnseiten in einer ersten Richtung (x-Richtung) erstrecken. Zu den Behandlungsbädern 12-21 können beispielsweise Bäder zum Tauchentfetten, Tauchspülen, Aktivieren, Zinkphosphatieren, Tauchspülen mit vollentsalztem Wasser zum Tauchlackieren und dergleichen mehr gehören.

Zum Transport von Teilen durch die Vorrichtung 10 hindurch und zum Ein- und Austauchen der Teile in die Behandlungsbäder 12-21 ist eine Mehrzahl von Tragelementen 36 in verschiedenen Positionen vorgesehen, von denen exemplarisch lediglich vier mit 36, 36', 36'' und 36''' dargestellt sind. Jedes Tragelement 36 umfasst einen Ausleger 41, der etwa horizontal hervorsteht. Am äußeren Ende jedes Auslegers 41 ist eine insgesamt mit 37 bezeichnete Schwenkeinrichtung vorgesehen, mittels derer eine Aufnahme 40 für zu behandelnde Teile 42 um eine Schwenkachse 38 verschwenkt werden kann, wie durch den Doppelpfeil 39 bei der Schwenkeinrichtung 37 schematisch angedeutet ist. Zu behandelnde Teile 42, bei denen es sich beispielsweise um Fahrzeugkarosserien (Rohkarosserien) handeln kann, werden jeweils auf einer Aufnahme 40 an einer Schwenkeinrichtung 37 aufgenommen, durch Transport der Tragelemente 36 zu den jeweiligen Behandlungsbädern 12-21 bewegt, durch Betätigen der Schwenkeinrichtung 37 in diese ein- und ausgetaucht und verlassen schließlich das letzte Behandlungsbad 21, bevor sie in einer Position, die mit der Ziffer 42' angedeutet ist, an eine nachfolgende Anlage übergeben werden können.

Zum Transport der Tragelemente 36 ist eine insgesamt mit der Ziffer 22 bezeichnete Fördereinrichtung 22 vorgesehen, die in Form eines Umlaufförderers ausgebildet ist, der von einem Schleppantrieb angetrieben sein kann oder der individuell angetriebene, einzeln verfahrbare Tragelemente 36 aufweist. Die Fördereinrichtung 22 umfasst einen Arbeitsabschnitt 24, der sich in der ersten Richtung (x-Richtung) entlang der Stirnseiten der Behandlungsbäder 12-21 erstreckt, einen sich zum Arbeitsabschnitt 24 parallel davon beabstandet erstreckenden Rückführabschnitt 26 zur Rückführung der Tragelemente, einen ersten Kopfabschnitt 28 und einen zweiten Kopfabschnitt 30. Im Bereich des ersten Kopfabschnittes 28 befindet sich das Tragelement 36 mit seiner Aufnahme 40 in einer Übernahmeposition 32, in der zu behandelnde Teile 42 von einer vorgeordneten Fertigungsstation in Richtung des Pfeiles 43 in der ersten Richtung (x-Richtung) zugeführt werden können und auf der Aufnahme 40 fixiert werden können.

Ein in der Übernahmeposition 32 übernommenes Teil 42 wird nun durch die Bewegung entlang der Fördereinrichtung 22 aus der Übernahmeposition 32 in Richtung des Pfeiles 44 um 90° verschwenkt und gelangt sodann zu den Behandlungsbädern 12-21, an denen es, wie durch den Pfeil 45 dargestellt ist, in x-Richtung entlang transportiert wird. Nach Verlassen des letzten Behandlungsbades 21 erfolgt am Übergang vom Arbeitsabschnitt 24 zum zweiten Kopfabschnitt 30 eine weitere Verschwenkung der Tragelemente um 90°, wie durch den Pfeil 46 angedeutet ist. Es ergibt sich so am zweiten Kopfabschnitt 30 eine Übergabeposition 34, in der behandelte Teile 42' entweder in x-Richtung entnommen werden können oder gegebenenfalls senkrecht dazu in y-Richtung seitlich verschoben werden können, wie durch den Pfeil 47 angedeutet ist, um an eine nachfolgende Fertigungsstation, beispielsweise eine Einbrennanlage, übergeben zu werden.

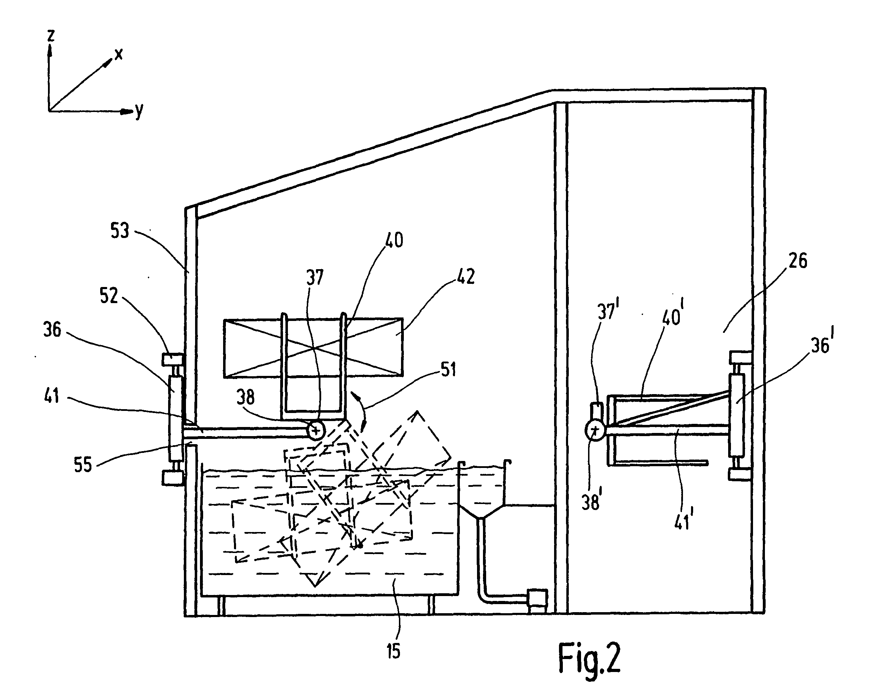

Der Aufbau der Tragelemente nebst Schwenkeinrichtungen wird nunmehr anhand der Fig. 2 bis 4 näher erläutert.

In Fig. 2 ist ein Behandlungsbad 15 dargestellt, vor dessen Stirnfläche sich ein Tragelement 36 befindet. Das Tragelement 36 ist an einer nur schematisch dargestellten Führung 52 der Fördereinrichtung 22 aufgenommen, die durch eine Wand 53 gegenüber dem Raum abgetrennt ist, in dem das Behandlungsbad 15 aufgenommen ist. Das Tragelement 36 umfasst einen in Richtung auf das Behandlungsbad 15 hervorstehenden Ausleger 41, so dass sich eine am Ende des Auslegers 41 aufgenommene Schwenkeinrichtung 37 mit ihrer Schwenkachse 38 mittig über dem Behandlungsbad 15 befindet. Der Ausleger erstreckt sich durch einen Schlitz 55, der sich in der Wand 53 in Erstreckungsrichtung der Fördereinrichtung 22 erstreckt. An der Schwenkeinrichtung 37 ist eine Aufnahme 40 gehalten, in der ein zu behandelndes Teil 42 aufgenommen ist. In der in Fig. 2 dargestellten Position kann nunmehr das zu behandelnde Teil 42 durch Verschwenkung um die Schwenkachse 38 in Richtung des Doppelpfeils 51 nach unten verschwenkt werden, bis das zu behandelnde Teil 42 vollständig in das Behandlungsbad 15 eingetaucht ist. Der Schwenkvorgang kann während der Behandlungszeit zusätzlich fortgesetzt werden, um eine gleichmäßige Behandlung zu erzielen und um Luftbläschen, die an den Oberflächen anhaften könnten, möglichst weitgehend zu entfernen. Am Ende der Behandlung wird das Teil 42 wieder aus dem Behandlungsbad 15 in umgekehrter Richtung herausgeschwenkt und kann sodann durch Betätigen der Fördereinrichtung 22 oder eines selbständigen Antriebs des Tragelements 36 weiter transportiert werden.

Im rechten Bereich von Fig. 2 ist ferner noch ein weiteres Tragelement 36' mit Ausleger 41', Schwenkeinrichtung 37', die um die Schwenkachse 38' verschwenkbar ist, und mit Aufnahme 40' dargestellt, die sich im Bereich des Rückführabschnittes 26 der Fördereinrichtung befindet und somit wieder in Richtung zur Übernahmeposition 32 der Fördereinrichtung zurückgeführt wird.

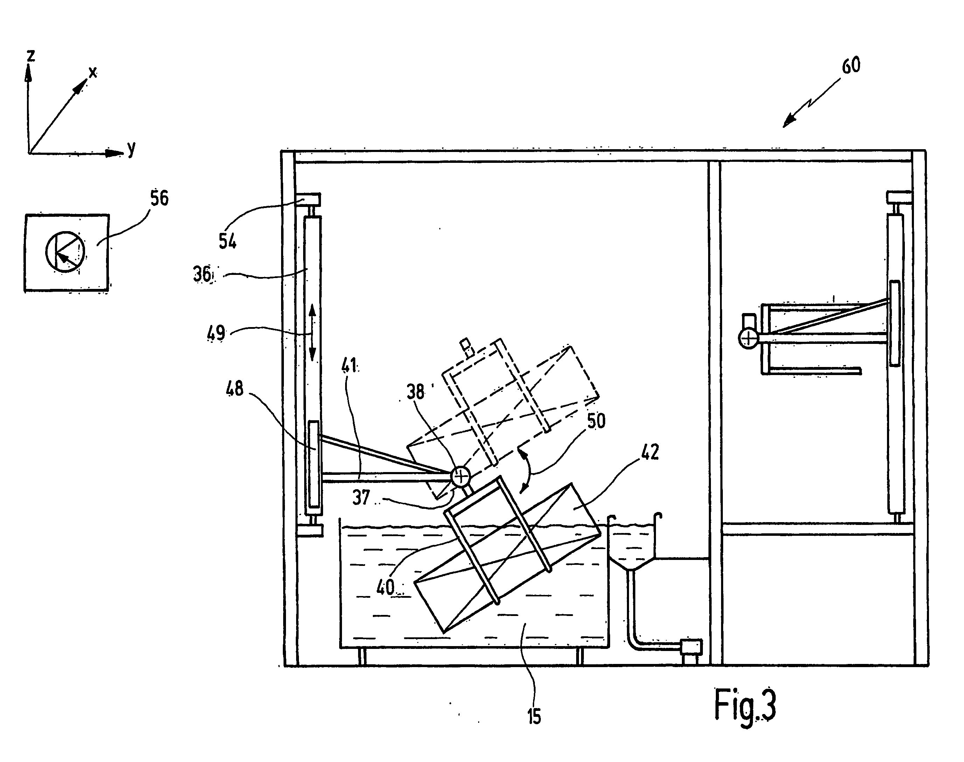

Eine leicht abgewandelte Ausführung ist in Fig. 3 dargestellt und insgesamt mit 60 bezeichnet.

Hierbei sowie bei den folgenden Figuren werden für die entsprechenden Teile entsprechende Bezugsziffern verwendet.

Der wesentliche Unterschied zu der anhand von Fig. 2 erläuterten Ausführung besteht darin, dass hierbei der Ausleger 41 nicht unmittelbar an dem jeweiligen Tragelement 36 aufgenommen ist, sondern an einer Hubeinrichtung 48, die in Richtung des Doppelpfeils 49 in Vertikalrichtung (z-Richtung) beweglich am Tragelement 36 aufgenommen ist. Das Tragelement 36 ist wiederum an einer Führung 54 der Fördereinrichtung 22 beweglich aufgenommen, befindet sich allerdings innerhalb des Raumes, in dem das Behandlungsbad 15 aufgestellt ist, jedoch seitlich davon beabstandet. Die am äußeren Ende des Auslegers 41 aufgenommene Schwenkeinrichtung 37, mittels der die Aufnahme 40 für ein Teil 42 in Richtung des Pfeiles 50 verschwenkt werden kann, kann zusätzlich noch in Richtung des Pfeiles 49 angehoben oder abgesenkt werden.

Es versteht sich, dass hierbei die Schwenkbewegung um die Schwenkachse 38 und die Hubbewegung in Richtung des Pfeils 49 von einer zentralen Steuereinrichtung 56, bei der es sich beispielsweise um eine SPS-Steuerung handeln kann, miteinander kombiniert gesteuert werden können, um so optimierte Bedingungen für das Eintauchen und Austauchen und gegebenenfalls bestimmte Bewegungskurven während der Behandlungszeit zu erreichen.

Auf diese Weise lassen sich in Abhängigkeit von den jeweiligen zu behandelnden Teilen besonders hochwertige Oberflächenbehandlungen erzielen.

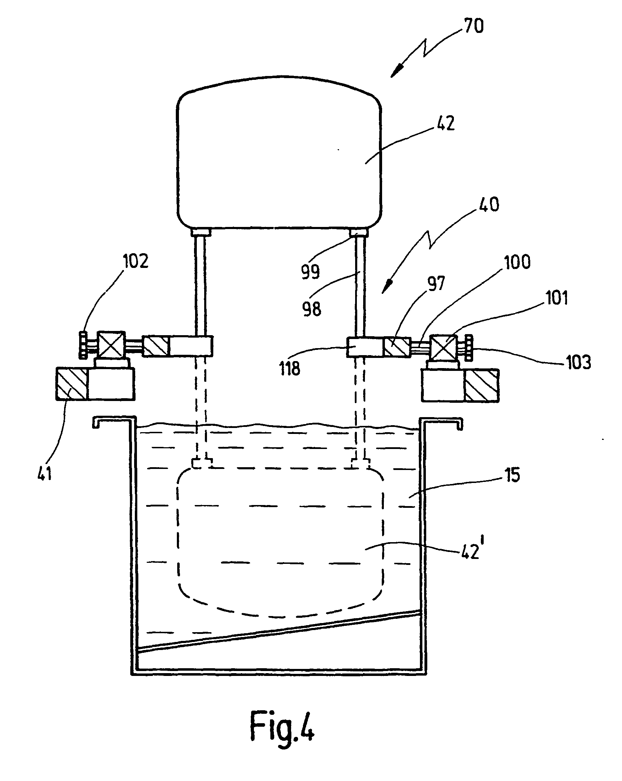

Eine leicht gegenüber der Ausführung gemäß Fig. 2 abgewandelte Ausführung einer erfindungsgemäßen Vorrichtung ist in Fig. 4 dargestellt und insgesamt mit der Ziffer 70 bezeichnet. An dem Ausleger 41 des Tragelements 36 ist die Aufnahme 40 zur Aufnahme eines zu behandelnden Teils 40 aufgenommen. Die Aufnahme 40 umfasst einen im wesentlichen U-förmiger Schwenkrahmen 97 an dem im dargestellten Fall vier Streben 98 vorgesehen sind, an deren äußeren Enden ein zu behandelndes Teil 42, beispielsweise eine Rohkarosserie, über Befestigungselemente 99 (z.B. Klemmen) aufgenommen ist. Der Schwenkrahmen 97 ist seitlich an Drehzapfen 100 in Schwenklagern 101 verschwenkbar gelagert. Dabei sind die Schwenklager 101 auf dem Ausleger 41 befestigt. Die Schwenklager 101 befinden sich seitlich soweit außerhalb des darunter befindlichen Behandlungsbades 15, dass eine senkrechte Projektion von den Schwenklagern 101 nach unten außerhalb des Behandlungsbades 15 verläuft. Somit können aus den Schwenklagern 101 austretende Verunreinigungen nicht in das Behandlungsbad 15 gelangen. An den äußeren Enden der Drehzapfen 100 sind in Fig. 4 ferner noch die Kettenräder (oder ggf. Rollen) zweier im übrigen nicht dargestellter Schwenkantriebe 102, 103 angedeutet, über den die Drehzapfen 100 mittels einer Kette bzw. eines Zahnriemens 106 verschwenkt werden können. Die Anordnung des Schwenkrahmens 97 ist hierbei vorzugsweise so getroffen, dass der Schwenkrahmen 97 selbst bereits seitlich außerhalb des Tropfbereiches des Teils 42 liegt. Lediglich vier Laschen oder Zungen 118, die vom Schwenkrahmen 97 aus nach innen hervorstehen, an denen die Streben 98 aufgenommen sind, befinden sich innerhalb des Tropfbereiches. Dadurch wird die Kontamination und Badverschleppung minimiert.

Insgesamt ist so durch die Lagerung und den Antrieb seitlich außerhalb des darunter angeordneten Behandlungsbades 15 sichergestellt, dass keine Verschmutzungen aus der Lagerung oder dem Antrieb der Schwenkeinrichtung in das Behandlungsbad 15 gelangen können.

Die Position eines nach unten in das Behandlungsbad 15 verschwenkten Teiles ist gestrichelt mit 42' angedeutet.

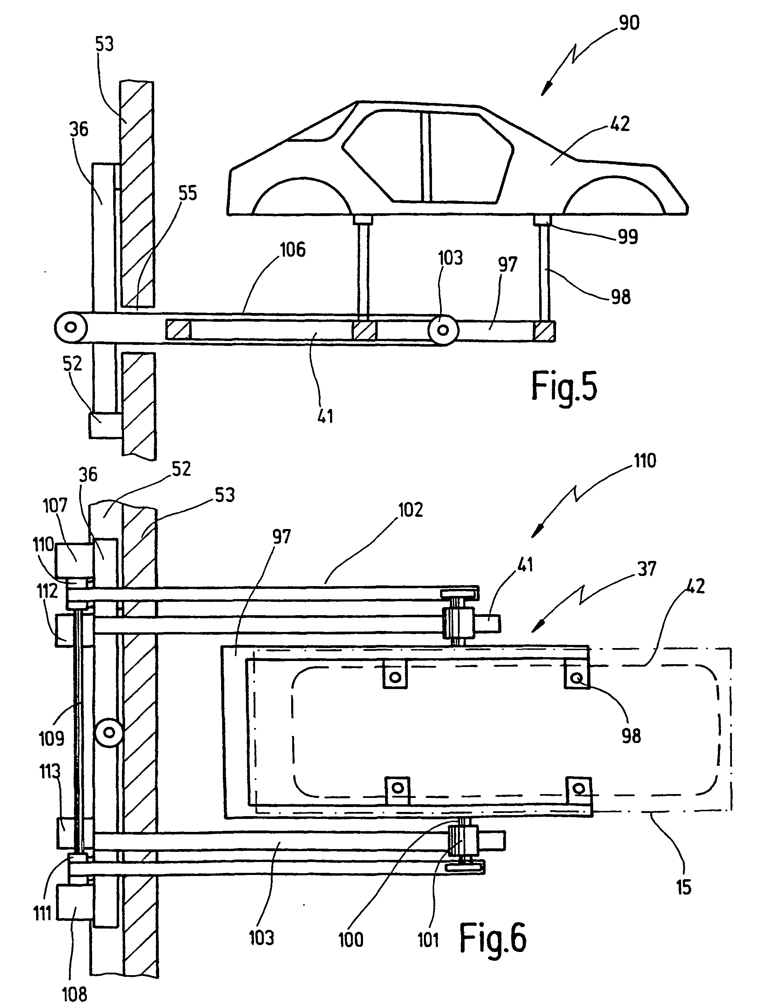

Fig. 5 zeigt eine gegenüber der Ausführung gemäß Fig. 4 leicht abgewandelte Ausführung, die insgesamt mit 90 bezeichnet ist. Hierbei ist der Ausleger 41 in der gleichen Ebene wie die Schwenklager und der Schwenkantrieb 103 angeordnet. Auf diese Weise kann die Fördereinrichtung mit dem Tragelement 36 durch eine Wand 53 von dem Raum getrennt sein, in dem das Behandlungsbad 15 aufgestellt ist. Der Schwenkantrieb 103 ist von einer Kette oder einem Band 106 angetrieben, das sich durch einen Schlitz 55 in der Wand 53 in der gleichen Ebene wie der Ausleger 41 erstreckt. Somit sind sämtliche Antriebsteile durch die Wand 53 von dem Raum abgetrennt, in dem das Behandlungsbad aufgestellt ist und stehen nur über den dünnen Schlitz 55 damit in Verbindung. Die Tragelemente 36 können auf einer darunter angeordneten Führung 52 mittels Rollen und zugeordneten Antriebsmotoren (nicht dargestellt) selbstständig verfahrbar angetrieben sein.

Eine weitere Abwandlung der erfindungsgemäßen Vorrichtung ist in Fig. 6 dargestellt und insgesamt mit der Ziffer 110 bezeichnet.

Auch hierbei sind Lagerung und Antrieb des Schwenkrahmens 97 derart ausgebildet, dass ein darunter liegendes Behandlungsbad 15 durch daraus austretende Verunreinigungen nicht kontaminiert werden kann.

Wiederum ist am Tragelement 36 ein Ausleger 41 befestigt, der durch den Schlitz in der Wand 53 horizontal zum Behandlungsbad 15 hervorsteht. An den nach außen hervorstehenden freien Enden des im wesentlichen U-förmigen Auslegers 41 ist der gleichfalls im wesentlichen U-förmig ausgebildete Schwenkrahmen 97 verschwenkbar aufgenommen. Am Schwenkrahmen 97 sind wiederum insgesamt vier Streben 98 erkennbar, die zur Verbindung mit einem zu behandelnden Teil 42 dienen, das gestrichelt angedeutet ist. Der Schwenkrahmen 97 ist in der zuvor anhand von Fig. 4 erläuterten Weise über Drehzapfen 100 in Schwenklagern 101 gehalten, die auf den freien Enden des Auslegers 41 befestigt sind. Am Tragelement 36 sind zwei Antriebsmotoren 111 angedeutet, die über eine Welle 109 miteinander gekoppelt sind und über Antriebsscheiben 110, 111, die Zahnriementriebe 102, 103 antreiben.

Am Tragelement 36 sind ferner noch zwei Antriebsmotoren 112, 113 zur Bewegung entlang der Führung 52 erkennbar, sowie eine Stützrolle 114 zur Abstützung des Tragelementes 36 an seinem oberen Ende an der Wand 53.

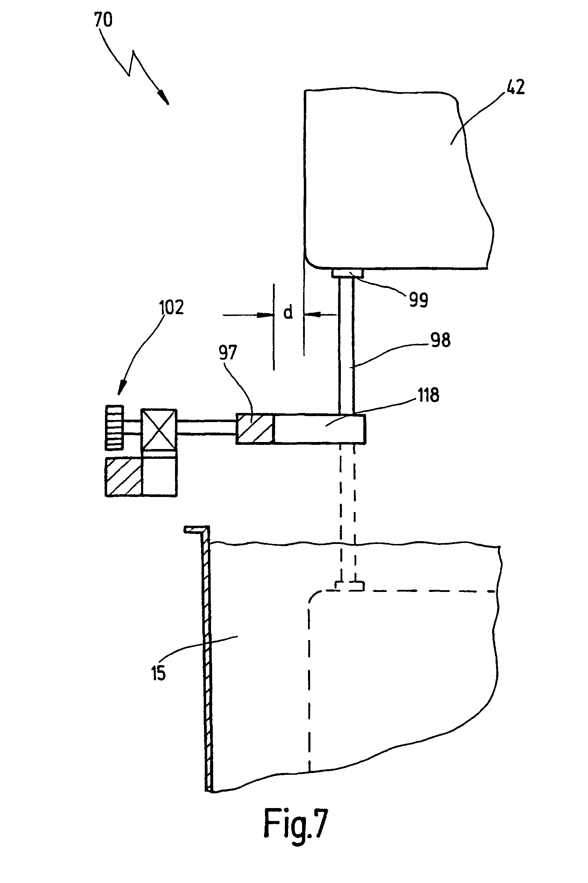

Fig. 7 zeigt einen vergrößerten Ausschnitt aus Fig. 4. Aus Fig. 7 ist deutlich erkennbar, dass die Laschen 118 soweit nach innen vorstehen, dass zwischen dem äußeren Rand des aufgenommen Teils 42 und dem Schwenkrahmen 97 in der Vertikalen ein Abstand d besteht. Somit befindet sich der eigentliche Schwenkrahmen 97 bereits deutlich außerhalb des Tropfbereiches, wie durch den Abstand d zwischen dem Seitenrand des Teils 42 und dem Schwenkrahmen 97 angedeutet ist. Am Schwenkrahmen 97 können ggf. zusätzlich noch kleine Düsen vorgesehen sein, um die mit der Badflüssigkeit kontaminierten Teile noch über dem Bad kurz abzuspülen, bevor der Transport zum nächsten Bad erfolgt.

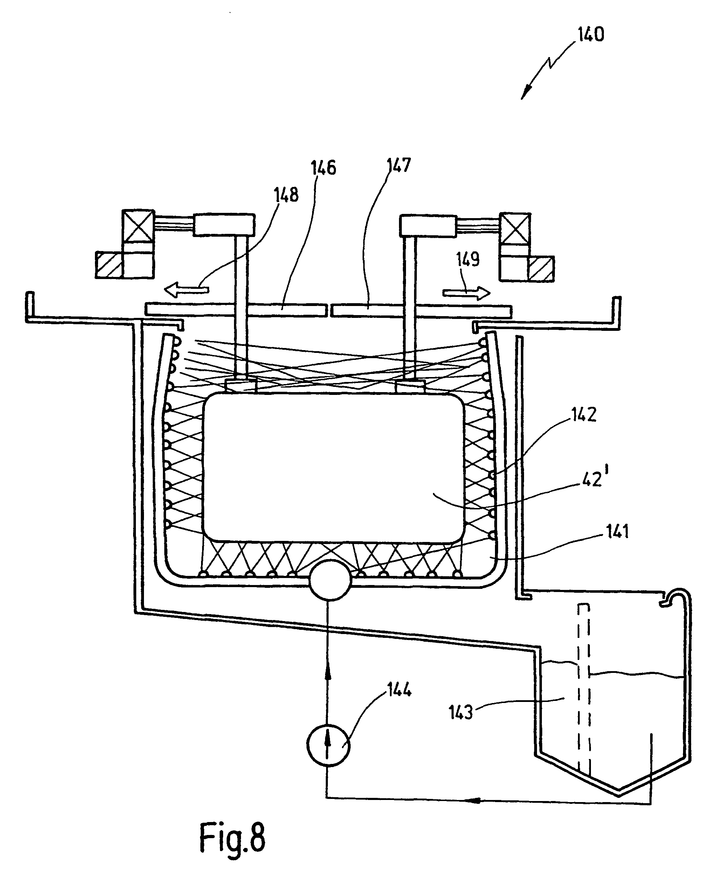

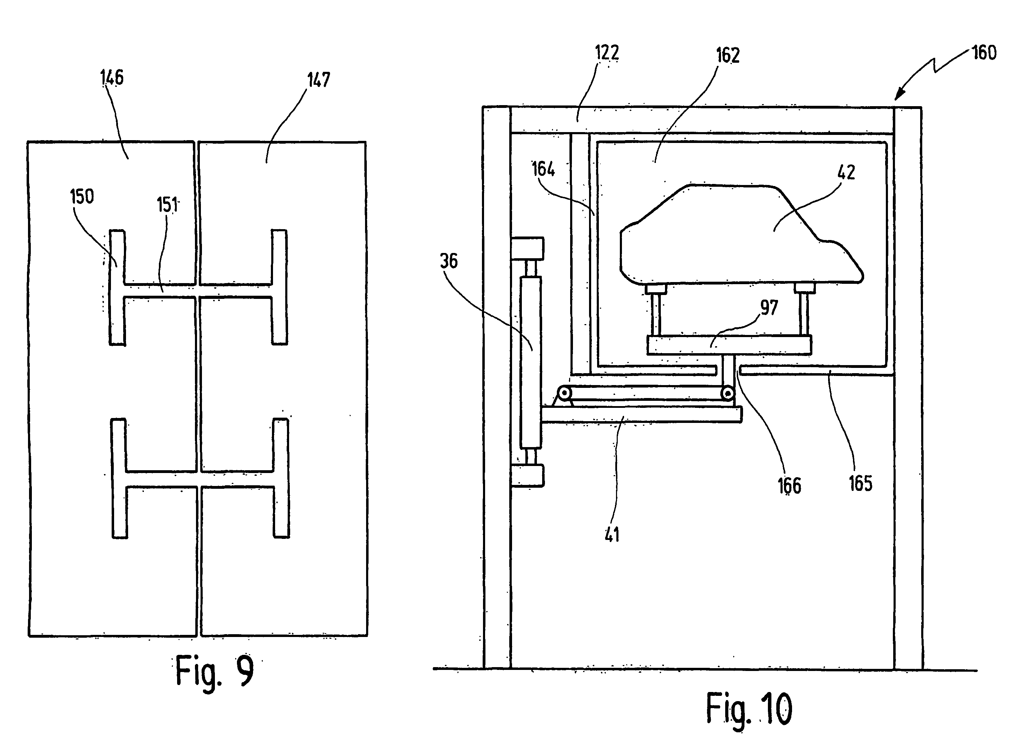

Eine weitere Abwandlung einer erfindungsgemäßen Vorrichtung ist in den Figuren 8 und 9 dargestellt und insgesamt mit 140 bezeichnet.

Hierbei ist eine Behandlungsstation im Form eines Spritztunnels 141 vorgesehen. Der Spritztunnel 141 ist an seiner Oberseite durch zwei Abdeckplatten 146, 147 abgeschlossen, die zum Ein- und Ausfahren des Teils 42 seitlich verschiebbar sind, wie durch die Pfeile 148, 149 angedeutet ist. Nach einem Einfahren eines Teils in den Spritztunnel 141, werden die Abdeckplatten 146, 147 geschlossen, so dass dann die Spritzbehandlung erfolgen kann. Wie aus Fig. 9 ersichtlich, können in den Abdeckplatten 146, 147 Schlitze 150, 151 vorgesehen sein, die insgesamt 2 H-förmige Ausnehmungen ergeben und die während der Spritzbehandlung sowohl eine Bewegung vor und zurück als auch eine leichte Schwenkbewegung ermöglichen, so dass sich ein gleichmäßiges Spritzbild ergibt. In Fig. 8 ist ferner noch das Reservoir 143 erkennbar, in dem die Behandlungsflüssigkeit aufgefangen wird und aus dem die Behandlungsflüssigkeit über eine Pumpe 144 den zahlreichen Spritzdüsen 142 zugeführt wird.

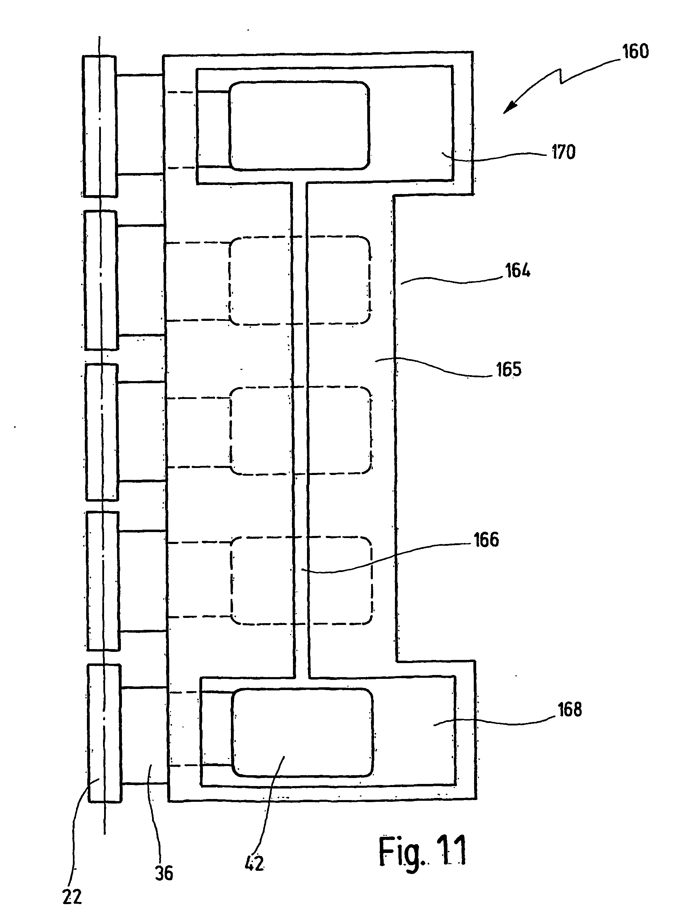

Ein weitere Ausführungsform der Erfindung ist in den Fig. 10 und 11 dargestellt und insgesamt mit der Ziffer 160 bezeichnet.

In Abwandlung zu den Ausführung gemäß Fig. 8 bzw. 9 ist hierbei eine Behandlungsstation 162 z.B. in Form eines Trockners für ein KTL-Einbrennverfahren dargestellt, die mit aufrecht stehenden Teilen 42 durchfahren wird. Während der Behandlung sind die Teile 42 also auf dem Schwenkrahmen 97 von unten her gehalten. Durch einen Längsschlitz 166 im Boden 165 eines den Trockner 162 umschließenden Gehäuses 164 ist der aufrecht stehende Transport der Teile 42 innerhalb des Gehäuses 164 ermöglicht. Aus Fig. 11 ist erkennbar, dass an der Einlaufseite des Gehäuses 164 im Boden 165 eine Einführöffnung vorgesehen ist, die ein Einschwenken eines Tragelementes 36 mit einem daran aufgenommenen Teil 42 von unten in eine stehende Position ermöglicht. Daran schließen sich beispielsweise drei Bearbeitungspositionen innerhalb des Gehäuses 164 an, die gestrichelt angedeutet sind. An der Auslaufseite des Trockners 162 ist in entsprechender Weise eine Ausführöffnung 170 vorgesehen, durch die das Tragelement 36 mit einem daran aufgenommenen Teil 42 wieder nach unten herausgeschwenkt werden kann.

## Patentansprüche

1. Vorrichtung zur Oberflächenbehandlung von Teilen, mit Behandlungsstationen (12, 13, 14, 15, 16, 17, 18, 19, 20, 21, 141, 162), insbesondere Behandlungsbädern, zur Behandlung der Teile (42, 92), mit einer Fördereinrichtung (22, 92) zum Transport der Teile, entlang derer mindestens ein Tragelement (36) beweglich geführt ist, an dem eine Aufnahme (40) zur Befestigung mindestens eines zu behandelnden Teils (42) vorgesehen ist, die an einer Schwenkeinrichtung (37) mit einer im wesentlichen horizontalen Schwenkachse (38) verschwenkbar gehalten ist, wobei die Teile (42, 92) durch Bewegung des Tragelements (36) entlang der Fördereinrichtung (22, 92) in eine Arbeitsposition oberhalb oder unterhalb einer Behandlungsstation (12, 13, 14, 15, 16, 17, 18, 19, 20, 21, 141, 162) bewegbar sind, wobei das Tragelement (36) und die Aufnahme (40) derart ausgebildet sind, dass die Teile (42, 92) in der Arbeitsposition oberhalb oder unterhalb einer Behandlungsstation (12, 13, 14, 15, 16, 17, 18, 19, 20, 21, 141, 162) in die Behandlungsstation ein- und ausschwenkbar sind, **dadurch gekennzeichnet, dass** die Aufnahme (40) an Schwenklagern (101) verschwenkbar aufgenommen ist, die sich in der Arbeitsposition zum Ein- oder Ausschwenken eines Teils in eine Behandlungsstation seitlich außerhalb der Behandlungsstation (12-21, 141, 162) befinden.

2. Vorrichtung nach Anspruch 1, **dadurch gekennzeichnet, dass** die Fördereinrichtung (22), entlang derer das mindestens eine Tragelement (36) beweglich ist, außerhalb der Behandlungsstationen (12-21, 141, 162) verläuft.

3. Vorrichtung nach Anspruch 2, **dadurch gekennzeichnet, dass** die Fördereinrichtung (22) gegenüber der Behandlungsstation (15) durch eine Wand (53) abgetrennt ist.

4. Vorrichtung nach Anspruch 1, 2 oder 3, **dadurch gekennzeichnet, dass** das Tragelement (36) einen davon in Horizontalrichtung hervorstehenden Ausleger (41) aufweist, an dem die über oder unter einer Behandlungsstation (12-21, 141, 162) positionierbare Aufnahme (40) vorgesehen ist.

5. Vorrichtung nach Anspruch 4, **dadurch gekennzeichnet, dass** der Ausleger (41) durch einen Schlitz (55) in einer Wand (53) verläuft, die die Fördereinrichtung (22) von der Behandlungsstation (12-21, 141, 162) trennt.

6. Vorrichtung nach einem der vorhergehenden Ansprüche, **dadurch gekennzeichnet, dass** die Schwenkeinrichtung (37) einen Schwenkantrieb (102) aufweist, der sich in der Arbeitsposition seitlich außerhalb der entsprechenden Behandlungsstation (12-21, 141, 162), vorzugsweise durch eine Wand (53) davon getrennt, befindet.

7. Vorrichtung nach einem der vorhergehenden Ansprüche, **dadurch gekennzeichnet, dass** jedes Tragelement (36) mindestens einen Antrieb (112, 113) zum Verfahren entlang einer Führung (52) der Fördereinrichtung (22) aufweist.

8. Vorrichtung nach einem der vorhergehenden Ansprüche, **dadurch gekennzeichnet, dass** die Aufnahme (40) einen an Drehzapfen (100) gelagerten, vorzugsweise U-förmigen, H-förmigen oder rechteckförmigen Schwenkrahmen (97) aufweist, an dem Befestigungselemente (99) zur Befestigung eines zu behandelnden Teils (42) aufgenommen sind.

9. Vorrichtung nach Anspruch 8, **dadurch gekennzeichnet, dass** der Schwenkrahmen (97) um mehr als 180°, vorzugsweise um 360° verschwenkbar ist.

10. Vorrichtung nach einem der vorhergehenden Ansprüche, **gekennzeichnet durch** eine Hubeinrichtung (48), mittels derer die Aufnahme (40) in Vertikalrichtung verfahrbar am Tragelement (36) aufgenommen ist.

11. Vorrichtung nach einem der vorhergehenden Ansprüche, **gekennzeichnet durch** eine Steuereinrichtung (56), die zumindest mit der Fördereinrichtung (22) und den Schwenkeinrichtungen (37) zur Steuerung der Bewegung von zu behandelnden Teilen (42) gekoppelt ist.

12. Vorrichtung nach einem der vorhergehenden Ansprüche **dadurch gekennzeichnet, dass** eine Mehrzahl von Tragelementen (36) entlang eines Umlaufförderers (22) angetrieben ist.

13. Vorrichtung nach Anspruch 12, **dadurch gekennzeichnet, dass** die Fördereinrichtung (22) als Umlaufförderer ausgebildet ist, der sich mit einem Arbeitsabschnitt (24) entlang von Stirnseiten der Behandlungsstationen (12-21) in einer ersten Richtung (x-Richtung) erstreckt und mit einem Rückführabschnitt (26) von den Behandlungsstationen (12-21, 71) beabstandet zurückgeführt ist, wobei zwischen dem Arbeitsabschnitt (24) und dem Rückführabschnitt (26) Kopfabschnitte (28, 30) gebildet sind, mit einer Übernahmeposition (32) zur Aufnahme von zu behandelnden Teilen (42) an einem (30) der Kopfabschnitte (30, 32) und einer Übergabeposition (34) zur Ausgabe von behandelten Teilen (42) am anderen Kopfabschnitt (32).

14. Vorrichtung nach einem der vorhergehenden Ansprüche, **dadurch gekennzeichnet, dass** die Schwenkeinrichtung (37) einen Schwenkantrieb (102, 103) aufweist, der über die Fördereinrichtung (22) mit Energie versorgt wird.

15. Vorrichtung nach der Ansprüche 1 bis 11, 13 oder 14, **dadurch gekennzeichnet, dass** die Fördereinrichtung als Elektrohängebahn ausgebildet ist.

16. Vorrichtung nach einem der vorhergehenden Ansprüche, **dadurch gekennzeichnet, dass** mindestens eine Behandlungsstationen (141) als Spritztunnel oder Spültunnel ausgebildet ist.

17. Vorrichtung nach Anspruch 16, **dadurch gekennzeichnet, dass** die Behandlungsstation (141) Abdeckplatten (146, 147) aufweist, die über der Behandlungsstation (141) zusammenfahrbar sind.

18. Vorrichtung nach Anspruch 17, **dadurch gekennzeichnet, dass** in den Abdeckplatten (146, 147) Längsschlitze (150) zum Vor- und Zurückfahren der Tragelemente (36) und vorzugsweise Querschlitze (151) vorgesehen sind, die ein geringes Verschwenken der Tragelemente (36) um eine sich in Richtung der Fördereinrichtung (22) erstreckende Schwenkachse erlauben.

19. Vorrichtung nach einem der vorhergehenden Ansprüche, **dadurch gekennzeichnet, dass** zumindest eine der Behandlungsstationen (162) als Trockenstation, Einbrennofen, Inspektionsraum, Kühlstation, Klebestation oder Unterbodenschutzspritzstation ausgebildet ist.

20. Vorrichtung nach Anspruch 19, **dadurch gekennzeichnet, dass** mindestens eine Behandlungsstation (162) von einem Gehäuse (164) umschlossen ist, in dessen Boden oder Decke eine Einführöffnung (168) zum Einschwenken eines Tragelementes (36) in das Gehäuse (164) aufweist, die über einen sich in Richtung der Fördereinrichtung (22) erstreckenden Schlitz (166) mit einer Ausführöffnung (170) zum Ausschwenken eines Tragelementes (36) aus dem Gehäuse (164) verbunden ist.

21. Verfahren zur Oberflächenbehandlung von Teilen in Behandlungsstationen (12-21, 141, 162), insbesondere Behandlungsbädern, bei dem die Teile (42) jeweils an einer Aufnahme (40) befestigt werden, die an einem Tragelement (36) verschwenkbar aufgenommen ist, das entlang einer Fördereinrichtung (22) verfahrbar ist, wobei die Teile (42) durch Bewegen der Tragelemente (36) entlang der Fördereinrichtung (22) zu den Behandlungsstationen (12-21, 141, 162) transportiert werden, über diesen oder unter diesen positioniert werden und durch Verschwenken um eine im wesentlichen horizontale Schwenkachse (38) in die Behandlungsstationen (12-21, 141, 162) ein- und wieder ausgeschwenkt werden, **dadurch gekennzeichnet, dass** die Teile (42) während des Ein- und Ausschwenkens in die Behandlungsstationen (12-21, 141, 162) jeweils seitlich außerhalb einer der Behandlungsstationen (12-21, 141, 162) gehalten und vorzugsweise angetrieben werden.

22. Verfahren nach Anspruch 22, **dadurch gekennzeichnet, dass** die Teile (42) durch zumindest eine durch ein Gehäuse (164) umschlossene Behandlungsstation (162) mittels der Fördereinrichtung (22) hindurchgefahren werden, wobei sie durch eine Einführöffnung im Boden oder der Decke des Gehäuses (164) in das Gehäuse (164) eingeschwenkt werden, dann innerhalb des Gehäuses (164) stehend oder hängend transportiert werden und dann durch eine Ausführöffnung (170) wieder aus dem Gehäuse (164) herausgeschwenkt werden.

## Claims

1. A device for surface treatment of parts having treating stations (12, 13, 14, 15, 16, 17, 18, 19, 20, 21, 141, 162), in particular, treating baths, for treatment of the parts (42, 92), comprising a conveyor means (22, 92) for transport of the parts along which is movably guided at least one carrying element (36) provided with a holding fixture (40) for fixing at least one of the parts (42) to be treated, the holding fixture being pivotally supported on a slewing device (37) with a substantially horizontal pivot axis (38), the arrangement being such that movement of the carrying element (36) causes the parts (42, 92) to be moved along the conveyor means (22, 92) into a working position above or below a treating station (12, 13, 14, 15, 16, 17, 18, 19, 20, 21, 141, 162), the carrying element (36) and the holding fixture (40) being configured so that the parts (42, 92) can be swung into and out of the treating station (12, 13, 14, 15, 16, 17, 18, 19, 20, 21, 141, 162) in their working position above or below a treating station, **characterized in that** the holding fixture (40) is pivotally mounted on pivot bearings (101) which, in a working position in which a part is to be swung into or out of a treating station, is positioned laterally outside the treating station (12-21, 141, 162).

2. The device as defined in claim 1, **characterized in that** the conveyor means (22), along which the at least one carrying element (36) can be moved, extends outside the treating stations (12-21, 141, 162).

3. The device as defined in claim 2, **characterized in that** the conveyor means (22) is separated from the treating station (15) by a wall (53).

4. The device as defined in claim 1, claim 2 or claim 3, **characterized in that** the carrying element (36) comprises a cantilever arm (41), projecting from it in horizontal direction, on which is provided the holding fixture (40) which can be positioned above or below a treating station (12-21, 141, 162).

5. The device as defined in claim 4, **characterized in that** the cantilever arm (41) extends through a slot (55) in a wall (53) which separates the conveyor means (22) from the treating stations (12-21, 141, 162).

6. The device as defined in any of the preceding claims, **characterized in that** the slewing device (37) comprises a slewing drive (102) which in the working position is located laterally outside the corresponding treating station (12-21, 141, 162), being preferably separated therefrom by a wall (53).

7. The device as defined in any of the preceding claims, **characterized in that** each carrying element (36) comprises at least one drive (112, 113) for displacement along a guide (52) of the conveyor means (22).

8. The device as defined in any of the preceding claims, **characterized in that** the holding fixture (40) comprises a preferably U-shaped, H-shaped or rectangular slewing frame (97) mounted on pivot pins (100), on which mounting elements (99) for mounting a part (42) to be treated are received.

9. The device as defined in claim 8, **characterized in that** the slewing frame (97) can be pivoted by more than 180°, preferably by 360°.

10. The device as defined in any of the preceding claims, **characterized by** a lifting device (48) by which the holding fixture (40) is mounted on the carrying element (36) for displacement in vertical direction.

11. The device as defined in any of the preceding claims, **characterized by** a control device (56) which is coupled at least with the conveyor means (22) and the slewing device (37) for controlling the movement of parts (42) to be treated.

12. The device as defined in any of the preceding claims, **characterized in that** a plurality of carrying elements (36) is driven along a circulating conveyor (22).

13. The device as defined in claim 12, **characterized in that** the conveyor means (22) is configured as a circulating conveyor, one working section (24) of which extends along side faces of the treating stations (12-21) in a first direction (X direction), while a return section (26) is guided back at a distance from the treating stations (12-21, 71), with head sections (28, 30) formed between the working section (24) and the return section (26) that comprise a transfer position (32), for allowing parts (42) to be treated to be taken over at one (30) of the head sections (30, 32), and a takeover position (34) allowing parts (42) to be treated to be discharged at the other head section (32).

14. The device as defined in any of the preceding claims, **characterized in that** the slewing device (37) comprises a slewing drive (102, 103) which is supplied with energy via the conveyor means (22).

15. The device as defined in claims 1 to 11, 13 or 14, **characterized in that** the conveyor means is configured as telpher line system.

16. The device as defined in any of the preceding claims, **characterized in that** at least one of the treating stations (141) is configured as a spray tunnel or a washing tunnel.

17. The device as defined in claim 16, **characterized in that** the treating station (141) is provided with cover plates (146, 147) that can be moved together above the treating station (141).

18. The device as defined in claim 17, **characterized in that** the cover plates (146, 147) are provided with longitudinal slots (150) for the forward and return movement of the carrying elements (36), and preferably with transverse slots (151) that permit the carrying elements (36) to be slightly pivoted about a pivot axis extending in the conveying direction (22).

19. The device as defined in any of the preceding claims, **characterized in that** at least one of the treating stations (162) is configured as a drying station, baking stove, inspection room, cooling station, bonding station or underbody coating station.

20. The device as defined in claim 19, **characterized in that** the at least one treating station (162) is enclosed by a housing (164), the bottom or cover of which comprises a lead-in opening (168) for permitting the carrying element (36) to swung into the housing (164), which opening is connected, via a slot (166) extending in the direction of the conveyor means (22), with a lead-out opening (170) enabling the carrying element (36) to be swung out of the housing (164).

21. Method for surface treatment of parts in treating stations (12-21, 141, 162), especially in treating baths, wherein the parts (42) are each mounted on a holding fixture (40) pivotally received on a carrying element (36) that can be displaced along a conveyor means (22), the parts (42) being transported to the treating stations (12-21, 141, 162) by moving the carrying elements (36) along the conveyor means (22), being positioned above or below the stations, and are swung into and out of the treating stations (12-21, 141, 162) by a slewing movement about a substantially horizontal pivot axis (38), **characterized in that** the parts (42), are mounted and preferably driven laterally outside a treating station (12,21, 141, 162) at any time during movement into and out of the treating stations (12-21, 141, 162).

22. The method as defined in claim 22, **characterized in that** the parts (42) are moved by the conveyor means (22) through at least one treating station (162) which is enclosed by a housing (164), being swung into the housing (164) through a lead-in opening in the bottom or the cover of the housing (164), being then transported through the housing (164) in upright or suspended condition, and being thereafter swung out of the housing (164) through a lead-out opening (170).

## Revendications

1. Dispositif pour le traitement de surface de pièces, comportant des postes de traitement (12, 13, 14, 15, 16, 17, 18, 19, 20, 21, 141, 162), en particulier des bains de traitement, pour le traitement des pièces (42, 92), comportant un dispositif de convoyage (22, 92) pour le transport des pièces, le long duquel est guidé dans son déplacement au moins un élément porteur (36) sur lequel est prévue une partie réceptrice (40) pour la fixation d'au moins une pièce à traiter (42), qui est maintenue pivotante sur un dispositif de pivotement (37) avec un axe de pivotement (38) sensiblement horizontal, les pièces (42, 92) étant déplaçables par déplacement de l'élément porteur (36) le long du dispositif de convoyage (22, 92), dans une position de travail au-dessus ou au-dessous d'un poste de traitement (12, 13, 14, 15, 16, 17, 18, 19, 20, 21, 141, 162), l'élément porteur (36) et la partie réceptrice (40) étant conçus de manière que les pièces (42, 92) se trouvant en position de travail au-dessus ou au-dessous d'un poste de traitement (12, 13, 14, 15, 16, 17, 18, 19, 20, 21, 141, 162) puissent pivoter vers l'intérieur et vers l'extérieur dans le poste de traitement, **caractérisé en ce que** la partie réceptrice (40) est reçue de manière à pouvoir pivoter sur des paliers de pivotement (101) qui, dans la position de travail, pour le pivotement vers l'intérieur ou vers l'extérieur d'une pièce dans un poste de traitement, se trouvent latéralement à l'extérieur du poste de traitement (12 à 21, 141, 162).

2. Dispositif selon la revendication 1, **caractérisé en ce que** le dispositif de convoyage (22), le long duquel le au moins un élément porteur (36) est déplaçable, s'étend à l'extérieur des postes de traitement (12 à 21, 141, 162).

3. Dispositif selon la revendication 2, **caractérisé en ce que** le dispositif de convoyage (22) est séparé du poste de traitement (15) par une paroi (53).

4. Dispositif selon la revendication 1, 2 ou 3, **caractérisé en ce que** l'élément porteur (36) comporte un bras en porte-à-faux (41) dépassant de celui-ci dans la direction horizontale, sur lequel est prévue la partie réceptrice (40) pouvant être positionnée au-dessus ou au-dessous d'un poste de traitement (12 à 21, 141, 162).

5. Dispositif selon la revendication 4, **caractérisé en ce que** le bras en porte-à-faux (41) s'étend à travers une fente (55) d'une paroi (53), qui sépare le dispositif de convoyage (22) du poste de traitement (12 à 21, 141, 162).

6. Dispositif selon l'une des revendications précédentes, **caractérisé en ce que** le dispositif de pivotement (37) comporte un dispositif d'entraînement en pivotement (102) qui, en position de travail, se trouve latéralement à l'extérieur du poste de traitement (12 à 21, 141, 162) correspondant, de préférence séparé de celui-ci par une paroi (53).

7. Dispositif selon l'une des revendications précédentes, **caractérisé en ce que** chaque élément porteur (36) comporte au moins un dispositif d'entraînement (112, 113) pour le déplacement le long d'un guide (52) du dispositif de convoyage (22).

8. Dispositif selon l'une des revendications précédentes, **caractérisé en ce que** la partie réceptrice (40) comporte un cadre de pivotement (97) monté sur un tourillon (100), de préférence en U, en H ou de forme rectangulaire, sur lequel sont montés des éléments de fixation (99) pour la fixation d'une pièce (42) à traiter.

9. Dispositif selon la revendication 8, **caractérisé en ce que** le cadre de pivotement (97) peut pivoter de plus de 180°, de préférence de 360°.

10. Dispositif selon l'une des revendications précédentes, **caractérisé par** un dispositif de levage (48) au moyen duquel la partie réceptrice (40) est reçue sur l'élément porteur (36), de manière à pouvoir se déplacer dans la direction verticale.

11. Dispositif selon l'une des revendications précédentes, **caractérisé par** un dispositif de commande (56) qui est couplé au moins au dispositif de convoyage (22) et aux dispositifs de pivotement (37) pour la commande du déplacement de pièces (42) à traiter.

12. Dispositif selon l'une des revendications précédentes, **caractérisé en ce qu'**une pluralité d'éléments porteurs (36) est entraînée le long d'un convoyeur sans fin (22).

13. Dispositif selon la revendication 12, **caractérisé en ce que** le dispositif de convoyage (22) est réalisé comme convoyeur sans fin qui s'étend, par un tronçon de travail (24), le long de faces frontales des postes de traitement (12 à 21) dans une première direction (direction x) et est guidé en retour, par un tronçon de retour (26), à distance des postes de traitement (12 à 21, 71), des tronçons de tête (28, 30) étant formés entre le tronçon de travail (24) et le tronçon de retour (26), avec une position de reprise (32) pour reprendre des pièces (42) à traiter sur l'un (30) des tronçons de tête (30, 32), et une position de transfert (34) pour transférer des pièces (42) traitées sur l'autre tronçon de tête (32).

14. Dispositif selon l'une des revendications précédentes, **caractérisé en ce que** le dispositif de pivotement (37) comporte un dispositif d'entraînement en pivotement (102, 103) qui est alimenté en énergie par le dispositif de convoyage (22).

15. Dispositif selon les revendications 1 à 11, 13 ou 14, **caractérisé en ce que** le dispositif de convoyage est réalisé comme voie suspendue électrique.

16. Dispositif selon l'une des revendications précédentes, **caractérisé en ce qu'**au moins un poste de traitement (141) est réalisé comme tunnel de pulvérisation ou tunnel de lavage.

17. Dispositif selon la revendication 16, **caractérisé en ce que** le poste de traitement (141) comporte des plaques de couverture (146, 147) qui peuvent être rapprochées au-dessus du poste de traitement (141).

18. Dispositif selon la revendication 17, **caractérisé en ce que** dans les plaques de couverture (146, 147) sont prévues des fentes longitudinales (150) pour faire avancer et reculer les éléments porteurs (36), ainsi que de préférence des fentes transversales (151) qui autorisent un léger pivotement des éléments porteurs (36) autour d'un axe de pivotement s'étendant dans la direction du dispositif de convoyage (22).

19. Dispositif selon l'une des revendications précédentes, **caractérisé en ce qu'**au moins l'un des postes de traitement (162) est conçu comme poste de séchage, four de cuisson, chambre d'inspection, poste de refroidissement, poste de collage ou poste de projection pour protection de bas de caisse.

20. Dispositif selon la revendication 19, **caractérisé en ce qu'**au moins un poste de traitement (162) est entouré par un carter (164) dans lequel le fond ou le plafond présente une ouverture d'introduction (168) pour le pivotement d'un élément porteur (36) à l'intérieur du carter (164), laquelle est reliée, par une fente (166) s'étendant dans la direction du dispositif de convoyage (22), à une ouverture d'extraction (170) pour le pivotement d'un élément porteur (36) à l'extérieur du carter (164).

21. Procédé pour le traitement de surface de pièces dans des postes de traitement (12 à 21, 141, 162), en particulier des bains de traitement, dans lequel les pièces (42) sont fixées chacune à une partie réceptrice (40) qui est montée pivotante sur un élément porteur (36) lequel est déplaçable le long d'un dispositif de convoyage (22), les pièces (42) étant transportées, par déplacement des éléments porteurs (36), le long du dispositif de convoyage (22), vers les postes de traitement (12 à 21, 141, 162), sont positionnées au-dessus ou au-dessous de ceux-ci et sont pivotées à l'intérieur et à nouveau à l'extérieur des postes de traitement (12 à 21, 141, 162), par pivotement autour d'un axe de pivotement (38) sensiblement horizontal, **caractérisé en ce que** les pièces (42) sont maintenues et de préférence entraînées chacune latéralement à l'extérieur de l'un des postes de traitement (12 à 21, 141, 162), pendant le pivotement vers l'intérieur et vers l'extérieur dans les postes de traitement (12 à 21, 141, 162).

22. Procédé selon la revendication 21, **caractérisé en ce que** les pièces (42) sont déplacées au moyen du dispositif de convoyage (22), à travers au moins un poste de traitement (162) entouré par un carter (164), et sont pivotées à l'intérieur du carter (164) à travers une ouverture d'introduction pratiquée dans le fond ou le plafond du carter (164), elles sont ensuite transportées debout ou suspendues à l'intérieur du carter (164) et sont ensuite pivotées à nouveau vers l'extérieur du carter (164), à travers une ouverture d'extraction (170).
